# EUROPÄISCHE PATENTANMELDUNG

(11) **EP 0 849 573 A2**
(43) Veröffentlichungstag der Anmeldung: **24.06.1998**
(21) Anmeldenummer: 97120385.6
(22) Anmeldetag: 20.11.1997
(51) Int. Cl.: G01G 19/12

(54) **Fahrzeuginstalliertes Wägesystem**

(30) Priorität: 20.12.1996 DE 29622189 U
(71) Anmelder: MOBA-Mobile Automation GmbH, 65604 Elz (DE)
(72) Erfinder: Paul, Bernd, 65594 Runkel-Dehrn (DE)
(74) Vertreter: Schoppe, Fritz, Dipl.-Ing.

(57) **Zusammenfassung**

Eine Aufbauwaage, insbesondere zum Erfassen der Gewichtskraft eines Fahrzeugaufbaus (14) gegenüber einem Fahrzeugrahmen (12) weist eine Mehrzahl von Wiegeeinrichtungen (10), die den Fahrzeugaufbau (14) gegenüber den Fahrzeugrahmen (12) halten und jeweils eine Wiegezelle (16) mit einer Hauptmeßrichtung und ein im wesentlichen senkrecht zu der Hauptmeßrichtung eine Relativverschiebung zwischen dem Fahrzeugaufbau (14) und dem Fahrzeugrahmen (12) ermöglichendes Lager (26) auf. Jede Wiegeeinrichtung (10) ist mit einer Anschlagvorrichtung zur Begrenzung der Relativverschiebung zwischen dem Fahrzeugaufbau (14) und dem Fahrzeugrahmen (12) versehen.

## Beschreibung

Die vorliegende Erfindung bezieht sich auf Waagen und insbesondere auf Aufbauwaagen zum Erfassen der Gewichtskraft eines Fahrzeugaufbaus gegenüber einem Fahrzeugrahmen.

Seit dem rapiden Steigen der Müllentsorgungskosten besteht in den Haushalten und besonders in der Industrie, die den Müll produzieren, der Wunsch, Müllgebühren nicht mehr über die Größe der Mülltonne, d.h. über das Volumen des Mülls, zu berechnen, sondern für jeden Haushalt bzw. jede Industrieeinheit getrennt über die Masse des Mülls. Dazu ist es notwendig, daß das Gewicht eines Müllastwagens und insbesondere das Gewicht des Fahrzeugaufbaus desselben gemessen wird, bevor der Müll eines Müllproduzenten in den Fahrzeugrahmen eingeworfen wird. Diese erste Messung dient als Referenzgröße. Nachdem der Müll eines Haushalts bzw. einer Industrieeinheit in den Fahrzeugaufbau eingebracht worden ist, wird wieder eine Messung durchgeführt, wonach von dem Meßwert der zweiten Messung der Referenzwert, d.h. der Meßwert der ersten Messung, abgezogen werden kann, um das Gewicht des Mülls eines speziellen Haushalts bzw. einer speziellen Industrieeinheit zu erhalten. Ist die produzierte Müllmasse jedes Haushalts bekannt, so ist es möglich, ohne Ungerechtigkeiten individuell angepaßte Müllgebühren für jeden Haushalt bzw. jede Industrieeinheit festzulegen. Damit ist es u.a. möglich, einen zusätzlichen Anreiz zur Müllvermeidung zu schaffen, da nun der, der weniger Müll produziert, auch mit geringeren Kosten belastet wird.

Damit eine individuelle Müllerfassung flächendeckend eingesetzt werden kann, muß ein zuverlässiges und robustes Erfassungssystem vorhanden sein, damit die Genauigkeit der Müllerfassung für jeden Müllproduzenten abrechnungsspezifische Gesetze und Regelungen erfüllen kann.

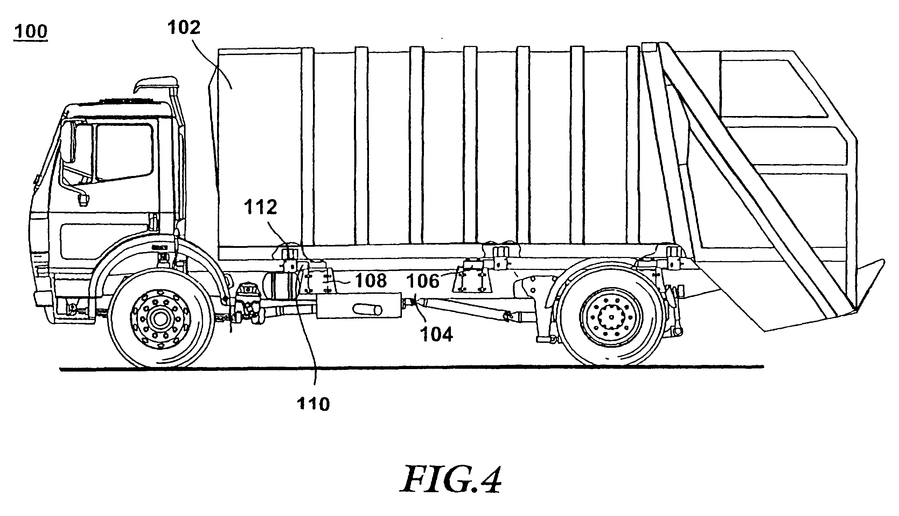

Fig. 4 zeigt einen Müllastwagen 100, der ein bekanntes System zum Erfassen der Gewichtskraft eines Fahrzeugaufbaus 102 gegenüber einem Fahrzeugrahmen 104 aufweist. Der Fahrzeugaufbau 102 ist an dem Fahrzeugrahmen 104 über insgesamt vier oder sechs (in Fig. 4 nur drei gezeigt) Wiegeeinrichtungen 106 befestigt. Theoretisch betrachtet würden insgesamt drei Wiegeeinrichtungen ausreichen, um das Gewicht des Fahrzeugaufbaus 102 erfassen zu können. In der Praxis werden jedoch mindestens vier oder mehr Wiegeeinrichtungen 106 zum Einsatz kommen. Jede Wiegeeinrichtung 106 ist an dem Fahrzeugrahmen 104 durch eine Befestigungsplatte 108 und eine Mehrzahl von Schrauben Starr befestigt. An der Befestigungsplatte 108 befindet sich eine Wiegezelle 110, die über ein sogenanntes Elastomer-Lager 112 mit dem Fahrzeugaufbau 102 nicht starr verbunden ist. Üblicherweise weist jede Wiegezelle 110 einen Biegebalken oder Scherstab auf, an dem Dehnungsmeßstreifen angebracht sind. Die Dehnungsmeßstreifen sind auf für Fachleute bekannte Art und Weise in einer Brücke verschaltet, um beispielsweise thermische Einflüsse und ähnliches kompensieren zu können.

Das Elastomer-Lager 112, das den Fahrzeugaufbau 102 und den Fahrzeugrahmen 104 elastisch verbindet, ist erforderlich, damit nicht sämtliche Bewegungen des Fahrzeugaufbaus 102 gegenüber dem Fahrzeugrahmen 104 auf die Wiegezelle 110 und insbesondere auf den Biegebalken übertragen werden, was falsche Meßergebnisse liefern würde. Ferner ist die elastomerische Lagerung des Fahrzeugaufbaus 102 auf dem Fahrzeugrahmen 104 erforderlich, um beispielsweise statische Durchbiegungen des Fahrzeugrahmens 104 oder des Fahrzeugaufbaus 102 gewissermaßen von der Wiegezelle 110 fernzuhalten, damit dieselbe keine statischen Signale aufgrund einer mechanischen Verschiebung der beiden Systeme Fahrzeugaufbau 102 und Fahrzeugrahmen 104 ausgibt, durch die sich die Meßgenauigkeit verschlechtern würde.

Wie es bereits erwähnt wurde, ist es für einen weit verbreiteten Einsatz der Aufbauwaagen unbedingt erforderlich, daß sie robust sind und genau und zuverlässig messen. Ferner müssen die Aufbauwaagen eine möglichst lange Lebensdauer erreichen, damit sichergestellt ist, daß sie auch unter sehr ungünstigen Fahrbedingungen des Lastwagens oder bei sehr ungünstigen Beladungssituationen des Lastwagens keinen Schaden erleiden.

Die Aufgabe der vorliegenden Erfindung besteht darin, eine haltbare und zuverlässige Aufbauwaage zu schaffen.

Diese Aufgabe wird durch eine Aufbauwaage insbesondere zum Erfassen der Gewichtskraft eines Fahrzeugaufbaus gegenüber einem Fahrzeugrahmen gemäß Anspruch 1 gelöst.

Der vorliegenden Erfindung liegt die Erkenntnis zugrunde, daß die durch die Elastomer-Lager, durch die der Fahrzeugrahmen und der Fahrzeugaufbau verbunden sind, ermöglichte Relativbewegung zwischen den beiden durch eine Anschlagvorrichtung weiter eingeschränkt werden muß, damit die Wiegezelle selbst bei ungünstigen Situationen und ungünstigen Belastungen geschützt wird. Dadurch wird zum einen verhindert, daß die Wiegezelle mechanisch dauerhaft deformiert wird, wodurch sie entweder völlig defekt ist oder zumindest fehlerhafte Meßsignale ausgeben würde. Zum anderen wird die durch eine Anschlagvorrichtung abgesicherte Aufbauwaage genauere Meßwerte liefern, da Fehler, die zwar durch geeignete Anordnung der Dehnungsmeßstreifen mehr oder weniger kompensiert werden könnten, erst gar nicht eingeführt werden. Die Anschlagvorrichtung liefert eine zuverlässige Begrenzung der Relativverschiebung zwischen dem Fahrzeugaufbau und dem Fahrzeugrahmen, um die Wiegezelle selbst vor unerlaubten Belastungen zu schützen. Damit ist es auch möglich, preisgünstigere Wiegezellen zu verwenden, da die Wiegezelle selbst keine extremen Belastungen mehr aushalten muß, da diese Belastungen durch die Anschlagvorrichtung verhindert wird.

Das Elastomerlager, das sowohl im Stand der Technik als auch bei der vorliegenden Erfindung verwendet wird, erlaubt eine freie Dekonstruktion gegenüber seitlichen Verschiebungen, gegenüber Stößen (im Sinne einer Schockdämpfung) und gegenüber auftretenden Vibrationen. Ferner vollführt das Elastomer-Lager eine Rückführung der Konstruktion in die Ausgangslage, wenn Stöße, Vibrationen oder andere Belastungen abwesend sind. Durch seine flexible Natur bringt es ferner seine gleichmäßige Lastverteilung des Gewichts des Fahrzeugaufbaus auf alle vorhandenen Lager zwischen dem Fahrzeugaufbau und dem Fahrzeugrahmen mit sich.

Ein optional vorgesehener einstellbarer Überlastschutz stellt zusätzlich zu der Anschlagvorrichtung sicher, daß der Biegebalken der Wiegezelle nicht zu stark abgebogen wird.

Weiterhin können alle Anschlagvorrichtungen und der einstellbare Überlastschutz mit Berührungssensoren versehen sein, damit eine Messung automatisch gestoppt wird, wenn irgendein Anschlag wirksam ist, da in diesem Falle die Wiegezelle, die dem entsprechenden Anschlag zugeordnet ist, keine korrekten Ergebnisse mehr liefern wird. Auch hierdurch kann die Zuverlässigkeit und Genauigkeit der Messungen sichergestellt werden.

Ein bevorzugtes Ausführungsbeispiel der vorliegenden Erfindung wird nachfolgend bezugnehmend auf die beiliegenden Zeichnungen detaillierter erläutert. Es zeigen:
- Fig. 1: eine Aufbauwaage gemäß einem ersten Ausführungsbeispiel der vorliegenden Erfindung;
- Fig. 2: eine Aufbauwaage gemäß einem zweiten Ausführungsbeispiel der vorliegenden Erfindung;
- Fig. 3: eine Seitenansicht der Aufbauwaage gemäß dem zweiten Ausführungsbeispiel der vorliegenden Erfindung; und
- Fig. 4: einen Müllastwagen, der eine Aufbauwaage gemäß dem Stand der Technik aufweist.

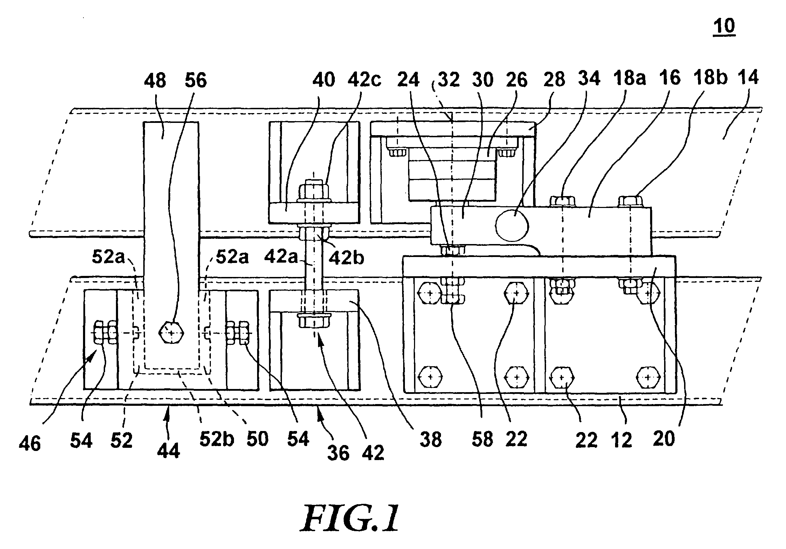

Eine Aufbauwaage gemäß einem ersten Ausführungsbeispiel der vorliegenden Erfindung weist eine Mehrzahl von Wiegeeinrichtungen 10 auf, die an den gleichen Stellen wie die bekannten Wiegeeinrichtungen 106 in Fig. 4, d.h. zwischen einem Fahrzeugrahmen 12 und einem Fahrzeugaufbau 14, angeordnet sind. Jede Wiegeeinrichtung 10 weist eine Wiegezelle 16 auf, die beispielsweise mittels Schrauben 18a, 18b an einem Wiegezellenflansch 20 im wesentlichen starr befestigt ist. Der Wiegezellenflansch 20 ist wiederum mittels einer Mehrzahl von Schrauben 22 mit dem Fahrzeugrahmen 12 fest verschraubt. Die Wiegezelle 16 ist mittels einer Schraubenverbindung 24 mit einem Elastomer-Lager 26 verbunden. Das Elastomer-Lager 26 ist über einen Lagerflansch 28 an dem Fahrzeugaufbau 14 befestigt. Ein mit der Wiegezelle 16 einstückig ausgeführter Biegebalken 30 wird durch das Gewicht des Fahrzeugaufbaus 14 im wesentlichen entlang einer Achse 32, die die Hauptmeßrichtung der Wiegezelle 20 darstellt, abgebogen. Auf dem Biegebalken 30 ist in geeigneter Weise eine Dehnungsmeßstreifenanordnung 34 angeordnet, welche vorzugsweise eine Brückenschaltung oder mehrere Brückenschaltungen von Dehnungsmeßstreifen aufweist. Neben dem Wiegezellenflansch 20 ist eine Abhebesicherung 36 ausgebildet. Die Abhebesicherung 36 umfaßt einen ersten Flansch 38 und einen zweiten Flansch 40, die durch eine Schrauben-Mutter-Kombination verbunden sind. Die Schrauben-Mutter-Kombination umfaßt eine Schraube 42a und zwei Muttern 42b, 42c. Die Zwei Muttern 42b, 42c dienen zum Befestigen der Schraube 42a in einer Bohrung des zweiten Flansches. Hierbei erfüllt die Mutter 42b die Funktion einer Kontermutter, um das Maß des Überstehens der Schraube 42 über den ersten Flansch 38 hinaus einzustellen. Das Maß des Überstehens wird vorzugsweise derart eingestellt, daß sich zwischen einem Kopf der Schraube 42a und der bezüglich Fig. 1 unteren Kante des ersten Flansches 38 ein Luftspalt befindet. Die richtige Wahl der Größe dieses Luftspaltes wird nachfolgend beschrieben.

Wiederum neben der Abhebesicherung 36 sind eine Absturzsicherung 44 und ein Horizontalanschlag 46 angeordnet. Der Horizontalanschlag 46 weist ein an dem Fahrzeugaufbau 14 befestigtes längliches Bauglied 48 auf, das sich bis in eine Ausnehmung 50 erstreckt. Die Ausnehmung 50 und das längliche Bauglied 48 sind derart dimensioniert, daß sich zwischen dem länglichen Bauglied 48 und der Begrenzung der Ausnehmung 50 ein Spielraum 52 ausbildet. Der Spielraum erstreckt sich um das längliche Bauglied 48 herum und umfaßt zwei vertikale Abschnitte 52a und einen horizontalen Abschnitt 52b. Wie es aus Fig. 1 zu sehen ist, können die beiden vertikalen Abschnitte 52a durch zwei Horizontalanschlagschrauben 54 verkleinert werden, wobei die Horizontalanschlagschrauben 54 mittels einer jeweiligen Kontermutter fixierbar sind. Durch die Horizontalanschlagschrauben 54 kann beispielsweise, wenn dieselben in die Ausnehmung hineingeschraubt werden, der Bewegungsspielraum des länglichen Bauglieds 48 reduziert werden. Analog dazu kann der Bewegungsspielraum des länglichen Bauglieds 48 vergrößert werden, wenn die beiden Horizontalanschlagschrauben 54 aus der Ausnehmung 50 herausgeschraubt werden, wobei der maximale Bewegungsspielraum durch die Abmessung der Ausnehmung 50 gegeben ist, wie es aus Fig. 1 ersichtlich ist.

Das längliche Bauglied 48 ist ferner Teil der Absturzsicherung 44, welche durch eine Absturzanschlagschraube 56 und die bezüglich Fig. 1 hinter dem länglichen Bauglied 48 angeordnete Wand der Ausnehmung 50 gebildet ist.

Zur zusätzlichen Sicherung des Biegebalkens 30 ist die Wiegeeinrichtung 10 mit einem Überlastschutz 58 versehen. Der Überlastschutz weist eine Schraube auf, die sich durch eine Bohrung in dem Wiegezellenflansch 20 erstreckt. Durch eine in Fig. 1 gezeigte Kontermutter kann die Überlastschutzschraube 58 in der Bohrung befestigt werden, derart, daß sie sich um einen bestimmten Betrag über die bezüglich Fig. 1 obere Kante des Wiegezellenflansches 20 hinaus erstreckt, damit eine zu große Biegung des Biegebalkens 30 verhindert wird. Bevorzugterweise ist die Achse der Überlastschutzschraube 58 mit der Hauptmeßrichtungsachse 32 identisch.

Wenn in den Fahrzeugaufbau 14 beispielsweise Müll eingebracht wird, vergrößert sich das Gewicht des Fahrzeugaufbaus 14, wodurch der Biegebalken 30 um einen größeren Betrag als vorher gebogen wird. Diese Biegung wird durch die Dehnungsmeßstreifenanordnung 34 in ein elektrisches Signal umgewandelt, das mit dem elektrischen Signal einer vorausgegangenen Messung vor dem Befüllen des Fahrzeugaufbaus 14 mit dem Müll eines speziellen Müllproduzenten verglichen wird. Die Differenz der beiden Meßwerte, d.h. des Meßpunkts vor dem Befüllen des Fahrzeugaufbaus, und des Meßpunktes nach dem Befüllen des Fahrzeugaufbaus ergibt dann die von einem einzigen Müllproduzenten erzeugte Müllmenge, welche dann entsprechend individuell abgerechnet werden kann. Die Überlastschutzschraube 58 steht um einen solchen Betrag über die bezüglich Fig. 1 obere Kante des Wiegezellenflansches 20 vor, derart, daß vorzugsweise 120% der Wiegekapazität der Wiegezelle 16 zugelassen sind. Selbstverständlich muß der Überlastschutz 58 derart eingestellt sein, daß auf keinen Fall die maximal zulässige Belastbarkeit des Biegebalkens 30 überschritten wird.

Während der Fahrt des Müllastwagens kann es vorkommen, daß sich der Fahrzeugaufbau 14 gegenüber dem Fahrzeugrahmen 12 verschiebt, da das Elastomer-Lager 26 eine beliebige durch die Elastizität des Lagers gegebene Bewegung des Fahrzeugaufbaus 14 bezüglich des Fahrzeugrahmens 12 zuläßt. Zum Schutz der Wiegezelle 16 wird eine Bewegung parallel zur Hauptmeßrichtung 32 durch die Abhebesicherung 36 begrenzt. Die Abhebesicherung 36 soll im speziellen derart eingestellt sein, daß keine Abbiegung des Biegebalkens 30 bezüglich Fig. 1 nach oben ermöglicht wird, damit derselbe keinen Schaden nimmt, und damit keine sinnlosen Meßergebnisse produziert werden, da ein zusätzliches Gewicht immer zu einer Abbiegung des Biegebalkens 30 nach unten führen wird.

Das Elastomer-Lager 26 läßt ferner eine Drehung des Fahrzeugaufbaus 14 um die Hauptmeßrichtungsachse 32 zu. Die in die Zeichenebene von Fig. 1 hineingerichtete bzw. herausgerichtete Bewegung wird durch die Absturzsicherung 44 begrenzt. Die bezüglich Fig. 1 horizontal gerichtete Komponente der Drehung um die Hauptmeßrichtungsachse 32 wird dagegen durch den Horizontalanschlag 46 begrenzt. Die variable Einstellbarkeit der Anschlagvorrichtung der Wiegeeinrichtung 10, die die Absturzsicherung 44, den Horizontalanschlag 46 und die Abhebesicherung 36 umfaßt, ermöglichen es, daß auch Wiegezellen mit unterschiedlichen Spezifikationen eingebaut werden können, ohne wesentliche Teile des Fahrzeugaufbaus bzw. des Fahrzeugrahmens modifizieren zu müssen.

Bei einem weiteren Ausführungsbeispiel der vorliegenden Erfindung können alle Anschläge mit einer elektrischen Erfassung versehen sein, die ein Signal liefert, wenn ein Anschlag wirksam ist, d.h. wenn ein bewegliches Teil des Anschlags ein festes Teil des Anschlags berührt. In diesem Fall wird zu einer zentralen Wiegeauswertungseinheit ein Sperrsignal gesendet, da in diesem Falle erfaßte Signale der Dehnungsmeßstreifenanordnung unsinnig sein werden, da nicht das gesamte Gewicht auf den Biegebalken 30 wirkt, weil auch irgendein Anschlag ein Gewicht aufnimmt, das dann bei der Messung nicht berücksichtigt wird.

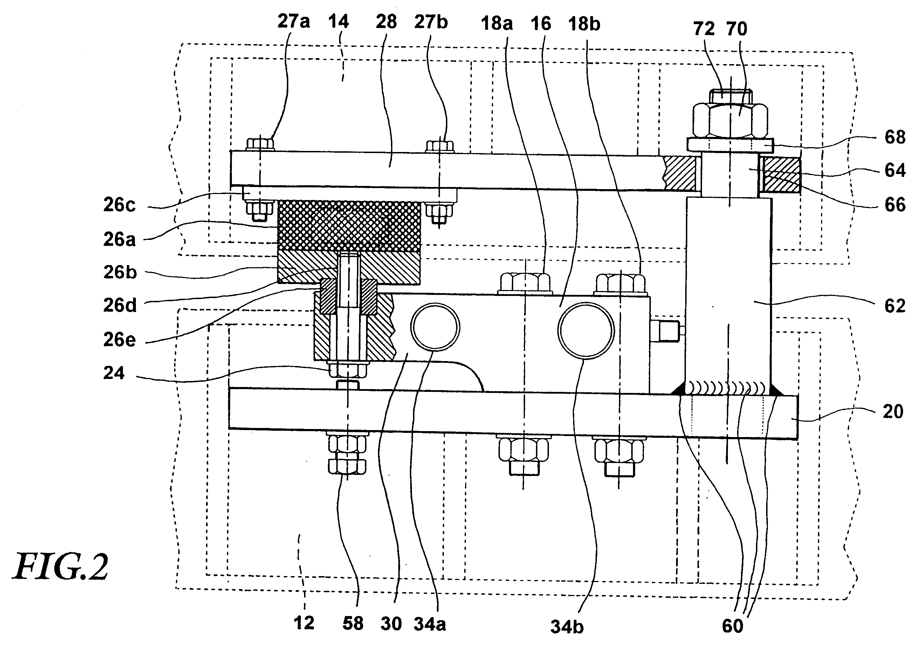

Fig. 2 zeigt eine Aufbauwaage gemäß einem zweiten Ausführungsbeispiel der vorliegenden Erfindung. Komponenten der Aufbauwaage des Zweiten Ausführungsbeispiels, die zu Komponenten der Aufbauwaage von Fig. 1 ähnlich sind, sind mit den gleichen Bezugszeichen bezeichnet und werden im weiteren nicht mehr explizit beschrieben.

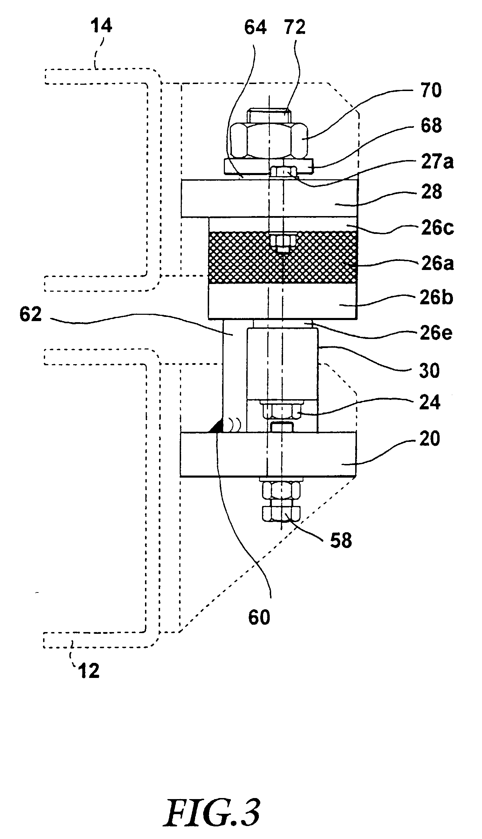

Im nachfolgenden wird auf Fig. 2, die eine Seitenansicht der Aufbauwaage gemäß dem zweiten Ausführungsbeispiel der vorliegenden Erfindung zeigt und auf Fig. 3 Bezug genommen, wobei Fig. 3 eine Frontansicht der Aufbauwaage von Fig. 2 darstellt. Im Gegensatz zu Fig. 1 ist in Fig. 2 das Elastomer-Lager 26 detaillierter gezeigt. Dasselbe besteht aus einem Elastomer-Block 26a, sowie aus einem weiteren Block 26b, welcher mit dem Elastomer-Block 26a fest verbunden ist. An der dem weiteren Block 26b gegenüberliegenden Seite des Elastomer-Blocks 26a ist ein Befestigungsblock 26c angebracht, welcher zwei Bohrungen (nicht gezeigt) für Elastomer-Lagerschrauben 27a, 27b aufweist. Die Befestigungsschrauben 27a, 27b stellen eine starre Verbindung zwischen dem Befestigungsblock 26c und dem Lagerflansch 28 her.

In dem weiteren Block 26b ist eine Bohrung 26d ausgeführt, in die die Schraubenverbindung 24 eingeschraubt ist, um das Elastomer-Lager 26 über ein Zwischenstück 26e mit dem Biegebalken 30 der Wägezelle 16 zu verbinden. Die Schraubenverbindung 24 liefert zusammen mit dem Überlastschutz 58 eine Überlastsicherung für die Wägezelle, wie es in Verbindung mit dem ersten Ausführungsbeispiel, das in Fig. 1 gezeigt ist, beschrieben wurde.

Im Gegensatz zu dem in Fig. 1 gezeigten ersten Ausführungsbeispiel der Aufbauwaage sind bei dem in Fig. 2 und 3 gezeigten zweiten Ausführungsbeispiel der vorliegenden Erfindung der Horizontalanschlag, die Abhebesicherung und die Absturzsicherung, die die Anschlagvorrichtung bilden, in einer Einheit ausgeführt. Mittels einer Schweißnaht 60 ist ein plattenförmiges Vorstandbauglied 62 mit dem Wägezellenflansch 20 starr verbunden, welcher wiederum mit dem Fahrzeugrahmen 12 fest verbunden ist. Einstückig mit dem Vorstandbauglied 62 ist eine Anschlaghülse 64 ausgeführt, die sich durch eine Bohrung 66 in dem Lagerflansch erstreckt. Wie es aus Fig. 2 ersichtlich ist, weist die Bohrung 66 in dem Lagerflansch 28 einen etwas größeren Durchmesser als der Außendurchmesser der Anschlaghülse 64 auf. Dadurch ergibt sich ein Luftspalt zwischen der Außenwand der Anschlaghülse 64 und der Innenwand der Bohrung 66, welcher sowohl die Funktion der Absturzsicherung als auch die Funktion des Horizontalanschlags implementiert. Die Anschlaghülse 64 ist durch einen kreisförmigen Hülsenflansch 68 bezüglich Fig. 2 nach oben begrenzt. Der Außendurchmesser des Hülsenflansches 68 ist etwas größer als der Durchmesser der Bohrung 66 in dem Lagerflansch 28. Ferner ist der Hülsenflansch 68 von den Lagerflansch 28 etwa beabstandet, um wiederum einen Luftspalt zu bilden. Dieser Luftspalt implementiert wirksam die Funktion der Abhebsicherung, d.h. derselbe begrenzt eine Relativverschiebung des Fahrzeugaufbaues 14 gegenüber dem Fahrzeugrahmen 12 in der Vertikalrichtung. Durch eine Anschlagmutter 70, die auf einen Anschlagstift 72 geschraubt ist, ist die Größe des Luftspalts zwischen dem Hülsenflansch 68 und dem Lagerflansch 28 einstellbar.

Im Gegensatz zum in Fig. 1 gezeigten ersten Ausführungsbeispiel der Aufbauwaage gemäß der vorliegenden Erfindung sind also bei dem in Fig. 2 und Fig. 3 gezeigten zweiten Ausführungsbeispiel der vorliegenden Erfindung alle drei Funktionen der Anschlagvorrichtung, d.h. ein Horizontalanschlag, eine Abhebesicherung und eine Absturzsicherung, in einer Einheit implementiert.

In Abweichung von den vorher beschriebenen Ausführungsbeispielen, die die Aufbauwaage in Verbindung mit einem Mülllastwagen aufweisen, ist es für Fachleute offensichtlich, daß die Aufbauwaage gemäß der vorliegenden Erfindung auch für jeden anderen Lastwagen eingesetzt werden könnte. So ist dabei insbesondere an eine schnelle und effiziente Gewichtskontrolle zu denken, um ein Überladen eines Lastwagens, der beliebige Güter geladen hat, zu vermeiden, um geltende Sicherheitsanforderungen zu beachten.

## Patentansprüche

1. Aufbauwaage, insbesondere zum Erfassen der Gewichtskraft eines Fahrzeugaufbaus (14) gegenüber einem Fahrzeugrahmen (12), mit folgenden Merkmalen:
einer Mehrzahl von Wiegeeinrichtungen (10), die den Fahrzeugaufbau (14) gegenüber den Fahrzeugrahmen (12) halten und jeweils eine Wiegezelle (16) mit einer Hauptmeßrichtung und ein im wesentlichen senkrecht zu der Hauptmeßrichtung eine Relativverschiebung zwischen dem Fahrzeugaufbau (14) und dem Fahrzeugrahmen (12) ermöglichendes Lager (26) aufweisen;
dadurch gekennzeichnet,
daß jede Wiegeeinrichtung (10) eine Anschlagvorrichtung zur Begrenzung der Relativverschiebung zwischen dem Fahrzeugaufbau (14) und dem Fahrzeugrahmen (12) aufweist.

2. Aufbauwaage nach Anspruch 1, dadurch gekennzeichnet,
daß jeder Wiegezelle ein Überlastschutz (58) zugeordnet ist, um eine Zerstörung der Wiegezelle (16) bei auftretender Überlast zu vermeiden.

3. Aufbauwaage nach Anspruch 2, dadurch gekennzeichnet,
daß die Wiegezelle (16) einen Biegebalken (30) aufweist, dessen Biegung mittels einer Dehnungsmeßstreifenanordnung (34) erfaßbar und ein Maß für die auf die Wiegezelle (16) wirkende Gewichtskraft ist.

4. Aufbauwaage nach Anspruch 3, dadurch gekennzeichnet,
daß der Überlastschutz (58) eine mittels einer Gegenmutter einstellbare Stiftvorrichtung ist, deren Symmetrieachse im wesentlichen konzentrisch zu einer Symmetrieachse des Lagers (26) ist.

5. Aufbauwaage nach einem der vorhergehenden Ansprüche, dadurch gekennzeichnet, daß die Anschlagvorrichtung eine Abhebesicherung (36) aufweist, die folgende Merkmale umfaßt:
einen an dem Fahrzeugrahmen angebrachten ersten Flansch (38) mit einer ersten Bohrung;
einen an dem Fahrzeugrahmen angebrachten zweiten Flansch (40) mit einer mit der ersten Bohrung ausgerichteten zweiten Bohrung; und
einer Schrauben-Muttern-Kombination (42),
wobei sich die Schraube (42a) der Schrauben-Muttern-Kombination (42) durch die erste und die zweite Bohrung erstreckt und wobei eine vertikale Verschiebung entgegen der Hauptmeßrichtung der Wiegezelle (16) zwischen dem Fahrzeugrahmen (12) und dem Fahrzeugaufbau (14) durch Positionierung von Muttern (42b, 42c) an der Schraube (42a) begrenzt wird, derart, daß die Wiegezelle (16) nicht entgegen ihrer Meßrichtung belastet wird.

6. Aufbauwaage nach einem der vorhergehenden Ansprüche, dadurch gekennzeichnet, daß die Anschlagvorrichtung einen Horizontalanschlag (46) aufweist, wobei der Horizontalanschlag (46) folgende Merkmale umfaßt:
ein an dem Fahrzeugaufbau (14) befestigtes, sich bis zum Fahrzeugrahmen (12) erstreckendes längliches Bauglied (48);
eine in dem Fahrzeugrahmen (12) gebildete Ausnehmung (50), die dimensioniert ist, um das Bauglied (48) und einen Spielraum (52) um dasselbe herum aufzunehmen; und
im wesentlichen senkrecht zu dem Bauglied (48) angeordnete Horizontalanschlagschrauben (54), die positioniert sind, um sich um einen variierbaren Betrag in die Ausnehmung (50) hinein zu erstrecken, um den Spielraum in einer ersten Richtung senkrecht zur Meßrichtung zu verkleinern.

7. Aufbauwaage nach Anspruch 6, dadurch gekennzeichnet,
daß die Anschlagvorrichtung eine Absturzsicherung (44) aufweist, bei der das längliche Bauglied (48) eine Bohrung aufweist, in der eine Absturzanschlagschraube (56) befestigt ist, durch die der Spielraum in einer zweiten Richtung senkrecht zur Meßrichtung der Wiegezelle (16) verkleinerbar ist.

8. Aufbauwaage nach einem der Ansprüche 1 bis 4, bei der die Anschlagvorrichtung in einer einzigen Einheit die Funktionen des Horizontalanschlags, der Abhebesicherung und der Absturzsicherung ausführt.

9. Aufbauwaage nach Anspruch 8,
bei der dem Fahrzeugaufbau (14) eine Bohrung (66) zugeordnet ist, deren Durchmesser größer als der Außendurchmesser eines Bauglieds (62, 64, 72) ist, das mit dem Fahrzeugrahmen im wesentlichen starr verbunden ist und sich durch die dem Fahrzeugaufbau 14 zugeordnete Bohrung erstreckt.

10. Aufbauwaage nach Anspruch 9,
bei dem das Bauglied (62, 64, 72) einen Abschnitt (68) aufweist, der derart dimensioniert ist, daß er nicht durch die Bohrung (66) laufen kann, und der an einem Bereich des länglichen Bauglieds angeordnet ist, der neben einer dem Fahrzeugaufbau (14) zugewandten Seite der Bohrung liegt.
